(19) **Europäisches Patentamt**
European Patent Office
Office européen des brevets

(11) **EP 2 433 356 B1**

(12) **EUROPÄISCHE PATENTSCHRIFT**

(45) Veröffentlichungstag und Bekanntmachung des Hinweises auf die Patenterteilung:
**10.10.2018  Patentblatt 2018/41**

(21) Anmeldenummer: **10719919.2**

(22) Anmeldetag: **04.05.2010**

(51) Int Cl.:
*H02M 1/32* (2007.01)     *H02P 21/09* (2016.01)
*H02P 29/032* (2016.01)

(86) Internationale Anmeldenummer:
**PCT/EP2010/002832**

(87) Internationale Veröffentlichungsnummer:
**WO 2010/133303 (25.11.2010 Gazette 2010/47)**

(54) **ÜBERSTROMBEGRENZUNG BEI DER REGELUNG VON STROMRICHTERGESPEISTEN DREHSTROMMASCHINEN**

OVERCURRENT LIMIT IN THE CONTROL OF THREE-PHASE MACHINES FED BY INVERTER

LIMITATION DE COURANT DE SURCHARGE LORS DU RÉGLAGE DE MOTEURS À COURANT TRIPHASÉ ALIMENTÉS PAR UN CONVERTISSEUR

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **18.05.2009   DE 102009021823**

(43) Veröffentlichungstag der Anmeldung:
**28.03.2012   Patentblatt 2012/13**

(73) Patentinhaber: **Bombardier Transportation GmbH 10785 Berlin (DE)**

(72) Erfinder:
• **KRAFKA, Peter**
  **69198 Schriesheim (DE)**
• **RAMPE, Michael**
  **69469 Weinheim-Hohensachsen (DE)**

(74) Vertreter: **Patentanwälte Bressel und Partner mbB Potsdamer Platz 10 10785 Berlin (DE)**

(56) Entgegenhaltungen:
EP-A1- 0 674 381     EP-A2- 0 739 088
WO-A1-2005/018086     WO-A1-2008/052714

• CHAPUIS Y A ET AL: "Direct torque control and current limitation method in start up of an induction machine", 7TH. INTERNATIONAL CONFERENCE ON POWER ELECTRONICS AND VARIABLE SPEED DRIVES. PEVD'98. LONDON, SEPT. 21 -23, 1998; [IEE CONFERENCE PUBLICATION NO. 456], LONDON : IEE, UK, 21. September 1998 (1998-09-21), Seiten 451-455, XP006504979, DOI: DOI:10.1049/CP:19980568 ISBN: 978-0-85296-704-1
• FILHO B J C ET AL: "A method for current and torque ripple reduction in sliding mode controlled induction motor drives", PROCEEDINGS OF THE INTERNATIONAL CONFERENCE ON INDUSTRIAL ELECTRONICS, CONTROL AND INSTRUMENTATION (IECON). KOBE, OCT. 28 - NOV. 1, 1991; [PROCEEDINGS OF THE INTERNATIONAL CONFERENCE ON INDUSTRIAL ELECTRONICS, CONTROL AND INSTRUMENTATION (IECON)], NE, Bd. CONF. 17, 28. Oktober 1991 (1991-10-28), Seiten 766-771, XP010042061, DOI: DOI:10.1109/IECON.1991.239191 ISBN: 978-0-87942-688-0

EP 2 433 356 B1

- HOFFMANN F ET AL: "FAST TORQUE CONTROL OF AN IGBT-INVERTER-FED THREE-PHASE A.C. DRIVE IN THE WHOLE SPEED RANGE. ÖEXPERIMENTAL RESULTS", EPE '95: 6TH. EUROPEAN CONFERENCE ON POWER ELECTRONICS AND APPLICATIONS. SEVILLA, SEPT. 19 - 21, 1995; [EUROPEAN CONFERENCE ON POWER ELECTRONICS AND APPLICATIONS], BRUSSELS, EPE ASSOCIATION, B, Bd. 3, 19. September 1995 (1995-09-19), Seiten 3.399-3.404, XP000538343,

**Beschreibung**

Die vorliegende Erfindung betrifft eine Steuer- und/oder Regeleinrichtung zum Betreiben einer Drehstrommaschine, die von einem 3-Phasen-Stromrichter gespeist wird, wobei die Einrichtung eine Steuer- und/oder Regelstruktur (kurz: die Struktur) mit einem Ständerflussregler (d.h. ein Regler, der den magnetischen Fluss des Ständers der Maschine regelt) und mit einem Schlupffrequenzregler oder einem Drehmomentregler aufweist. Die Erfindung betrifft ferner ein entsprechendes Verfahren zum Betreiben einer stromrichtergespeisten Drehstrommaschine sowie ein Schienenfahrzeug, in dem eine solche Struktur den Betrieb des oder der Antriebsmotoren steuert oder regelt.

WO 2008/052714 A1 beschreibt eine Einrichtung mit einer solchen Struktur beispielhaft für eine Drehstromasynchronmaschine. Die Einrichtung bzw. das Verfahren soll bei Hochleistungsanwendungen, wie beispielsweise Traktionsstromrichter für die Versorgung von Antriebsmotoren von Schienenfahrzeugen eingesetzt werden. Es soll eine mittelwert- und augenblickswertbasierte Pulsmustergenerierung zur Ansteuerung des Stromrichters ermöglicht werden, wobei unter optimaler Ausnutzung der zur Verfügung stehenden Eingangsspannung des Stromrichters hohe dynamische Anforderungen, insbesondere für Traktionsanwendungen bei Schienenfahrzeugen, erfüllt werden sollen. Die vorliegende Erfindung betrifft insbesondere dieselben Verfahren bzw. Steuer- und/oder Regeleinrichtungen und dieselben Anwendungen.

Bei Steuerungen und/oder Regelungen, die wie die Struktur der vorliegenden Erfindung den Ständerfluss und das Drehmoment bzw. die Schlupffrequenz regeln, können ohne zusätzliche regelungstechnische Maßnahmen unzulässig hohe Stromamplituden auftreten, die zu einer Schädigung oder Zerstörung des Stromrichters oder der Maschine führen würden, wenn keine sekundären Schutzmaßnahmen wie Überstromabschaltung des Stromrichters ergriffen würden. Bei alternativen Strukturen, die z. B. die flussbildende und die drehmomentbildende Komponente des Ständerstroms regeln (z. B. in der WO 2005/018086 beschrieben), kann ein regelungstechnischer Überstromschutz durch geeignete Begrenzung der Stromsollwerte gewährleistet werden. Bei Strukturen mit Ständerflussregler und mit Schlupffrequenzregler oder Drehmomentregler dagegen wird der Ständerstrom nicht unmittelbar geregelt, so dass zusätzliche Maßnahmen zur Begrenzung des Ständerstromes erforderlich sind. Derartige bisher bekannte Maßnahmen erfüllten diese Aufgabe nur unzureichend, so dass es häufiger zum Ansprechen der sekundären Schutzmaßnahme Überstromabschaltung kam.

Die unzulässig hohen Stromamplituden und damit die Schutzabschaltungen können insbesondere während hochdynamischen Vorgängen beim Betrieb der Maschine auftreten, d.h. bei schnellen Änderungen der Spannung des Zwischenkreises, aus dem der oder die Traktionswechselrichter versorgt werden, bei schnellen Änderungen der Drehzahl der Maschine, bei schnellen Änderungen des von der Maschine zu erzeugenden Drehmoments und/oder bei schnellen Änderungen des gewünschten magnetischen Flusses im Ständer der Maschine.

In der Veröffentlichung "Schnelle Drehmomentregelung im gesamten Drehzahlbereich eines hochausgenutzten Drehfeldantriebs" von Dieter Maischak, Fortschrittsberichte, VDI-Reihe 8, Nr. 479, Düsseldorf, Deutschland, VDI-Verlag 1995, ISBN 3-18-347908-7, ist die Begrenzung des Schlupffrequenzsollwertes der Regelung auf einen stationären Ständerstrommaximalwert vorgeschlagen worden. Dabei wird angenommen, dass sich insbesondere der magnetische Fluss der Maschine nicht ändert, d.h. dass die zeitliche Ableitung des Rotorflusses ungefähr gleich Null ist. Wenn aber schnelle Flussänderungen auftreten, d.h. die Maschine sich im nichtstationären magnetischen Zustand befindet, wird vorübergehend ein vergleichsweise hoher Magnetisierungsstrom (dies schließt den Fall der Entmagnetisierung mit ein, d.h. auch einen negativen Magnetisierungsstrom) des Ständers zur Flussverstellung benötigt. Die Begrenzung der Schlupffrequenz kann prinzipbedingt den Magnetisierungsstrom nicht begrenzen und somit Überstromabschaltungen aufgrund hoher Magnetisierungsstromamplituden nicht sicher ausschließen.

Mit dem von Maischak vorgeschlagenen Verfahren kann der Ständerstrom daher nicht in allen Betriebssituationen der Maschine (insbesondere bei gleichzeitiger Fluss- und Drehmomentanforderung wie es beim Betrieb von Schienenfahrzeugen oft der Fall ist) regelungstechnisch sicher auf einen Wert begrenzt werden, der einen kontinuierlichen Betrieb der Maschine ohne sekundäre Schutzmaßnahmen wie Überstromabschaltungen des Stromrichters jederzeit ermöglicht. Insbesondere muss es beim Betrieb von Straßenbahnen jederzeit möglich sein, mit Hilfe des Antriebsmotors ein der Fahrt der Straßenbahn entgegenwirkendes Drehmoment zu erzeugen. Dieses dynamische Bremsen mit Hilfe der Maschine wird aus Sicherheitsgründen als zweite unabhängige Bremse gefordert, um nicht ausschließlich auf die mechanische Bremse des Fahrzeugs angewiesen zu sein. Rollt das Fahrzeug z.B. im Wesentlichen ohne Antriebskraft und muss schnell dynamisch gebremst werden, ist es gleichzeitig erforderlich, den Ständerfluss und das von der Maschine erzeugte Drehmoment schnell zu erhöhen. Für ein dynamisches Bremsen steht der Antrieb bei Sperrung des Stromrichters aber nicht mehr zur Verfügung.

Ein weiterer Nachteil des von Maischak vorgeschlagenen Verfahrens besteht darin, dass die stationäre Ständerstrombegrenzung wesentlich von Maschinenparametern abhängt, die sich während des Betriebes als Funktion des Arbeitspunktes (Stromamplitude und/oder Rotortemperatur) ändern. Werden die Parameterwerte nicht korrekt gewählt bzw. unzureichend an den aktuellen Betriebszustand angepasst, kann es zu häufig dazu kommen, dass über die Strombegrenzung hinausgehende Schutzmaßnahmen wie das Sperren des Stromrichters ergriffen werden müssen.

Es ist eine Aufgabe der vorliegenden Erfindung, eine Steuer- und/oder Regeleinrichtung zum Betreiben einer Drehstrommaschine anzugeben, die von einem 3-Phasen-Stromrichter gespeist wird, wobei die Einrichtung den Ständerstrom wirksam und zuverlässig auf zulässige Werte begrenzt, wobei eine hohe Dynamik beim Betrieb der Maschine ermöglicht wird und wobei das häufige Auftreten von sekundären Schutzmaßnahmen, wie das Abschalten des Stromrichters vermieden wird. Unter dem Ständerstrom wird der Strom durch die Ständer-Wicklung der Maschine verstanden.

Die Aufgabe wird mittels einer Steuer- und/oder Regeleinrichtung gemäss Anspruch 1 und einem Verfahren gemäss Anspruch 3 gelöst.

Gemäß einem Grundgedanken der vorliegenden Erfindung wird innerhalb einer Regelstruktur mit Ständerfluss- und Schlupffrequenzregelung (oder alternativ Ständerfluss- und Drehmomentregelung) sowohl der flussbildende als auch der drehmomentbildende Ständerstrom über je einen Eingriff in die beiden Regelkreise begrenzt. Anders als bei dem oben erwähnten Verfahren von Maischak wird hinsichtlich der Magnetisierung der Maschine kein quasistationärer Betrieb vorausgesetzt.

Dabei wird zur Begrenzung des drehmomentbildenden Stromes der dem Schlupffrequenzregler (oder Drehmomentregler) zugeführte Sollwert auf einen Maximalwert (im Folgenden: der Schlupffrequenz- oder Drehmomentmaximalwert) begrenzt.

Durch die Begrenzung sowohl des flussbildenden als auch des drehmomentbildenden Ständerstroms durch Eingriff in die Regelkreise des Ständerflussreglers und des Schlupffrequenzreglers (oder des Drehmomentreglers) wird automatisch, ohne weitere erforderliche Maßnahmen, auch das folgende Problem gelöst: Da der Gesamtstrom durch den Ständer, d.h. der Ständerstromgrundschwingungsbetrag, auf einen Maximalwert begrenzt ist, muss bei aus dem Stand der Technik bekannten Verfahren festgelegt werden, ob die flussbildende oder die drehmomentbildende Ständerstromkomponente vorrangig beizubehalten ist, d.h. die jeweils andere Stromkomponente zu reduzieren ist, um den Maximalwert für den Gesamt-Ständerstromgrundschwingungsbetrag einzuhalten. Bei der Lösung gemäß der vorliegenden Erfindung ergibt sich die Priorität bei der Reduzierung automatisch, ohne weitere Maßnahmen. Ausführungsbeispiele für verschiedene Betriebssituationen, in denen zumindest eine Komponente des Ständerstroms zu reduzieren ist, werden noch in der Figurenbeschreibung erläutert.

Ferner wird zur Begrenzung des flussbildenden Stromes die Geschwindigkeit, mit der sich der Sollständerfluss ändert (vorzugsweise sowohl zu höheren als auch niedrigeren Flusswerten), auf einen Maximalwert (im Folgenden: maximales Flussrampeninkrement) begrenzt. Dies wird vorzugsweise dadurch erreicht, dass die Sollwertänderung am Eingang des Ständerflussreglers über ein Rampenglied (d.h. eine Einrichtung, die die Änderung entsprechend einer Zeitrampe beschränkt) begrenzt wird, falls der Sollwert einer zu hohen Änderungsgeschwindigkeit entspricht. Der Geschwindigkeit entspricht dabei der Anstieg/Abfall des Flusses zwischen zwei folgenden Arbeitstakten der Steuer- und/oder Regeleinrichtung.

Die beiden Maximalwerte (der Schlupffrequenz- oder Drehmomentmaximalwert und das maximale Flussrampeninkrement) werden während des Betriebs der Steuer- und/oder Regeleinrichtung kontinuierlich oder quasi kontinuierlich so festgelegt, dass keine unzulässig hohen Stromamplituden des Ständerstroms auftreten. Anders ausgedrückt, wird zumindest ein Maximalwert des Ständerstroms (insbesondere ein Maximalwert für die flussbildende Komponente der Ständerstromgrundschwingung und ein Maximalwert für den gesamten Ständerstromgrundschwingungsbetrag) dazu verwendet, einen Maximalwert für die Anstiegsgeschwindigkeit des Ständerflusses und einen Maximalwert für das Drehmoment oder die Schlupffrequenz zu berechnen und Maßnahmen zu ergreifen, dass diese beiden Maximalwerte (der Schlupffrequenz- oder Drehmomentmaximalwert und das maximale Flussrampeninkrement) nicht überschritten werden.

Besonders vorteilhaft wird die Steuer- und/oder Regeleinrichtung eingesetzt, wenn die Drehstrommaschine eine Asynchronmaschine ist und die Struktur den Ständerflussregler und den Schlupffrequenzregler aufweist.

Geeignete entsprechende Einrichtungen in der Regelstruktur, die die Einhaltung der vorgegebenen Maximalwerte für die Ständerstromgrundschwingung und der flussbildenden Stromkomponente gewährleisten, sind so genannte Begrenzungsregler. Darunter werden Regler verstanden, die im Normalbetrieb (d.h. wenn der zulässige Maximalwert des Begrenzungsreglers nicht überschritten ist) keinen Einfluss auf die für den Betrieb des zugeordneten Reglers (hier des Schlupffrequenzreglers oder Drehmomentreglers bzw. des Ständerflussreglers) relevante Sollgröße ausüben. Wenn dagegen der Sollwert den zulässigen Maximalwert überschreitet, wirkt der Betrieb des Begrenzungsregler begrenzend auf den Sollwert, sodass die Überschreitung über den unterlagerten Regelkreis verhindert wird. Der unterlagerte Regelkreis ist im Fall des Flussrampeninkrements der Regelkreis des Flussreglers, im Fall des Schlupffrequenzmaximalwerts oder Drehmomentmaximalwerts der Regelkreis des Schlupffrequenzreglers oder Drehmomentreglers.

Unter einer Begrenzung wird insbesondere eine Begrenzung des Betrages verstanden, d.h. es können zum Beispiel auch zum Bremsen eines Schienenfahrzeugs erzeugte Drehmomente begrenzt werden. Der Begrenzungsregler wirkt somit auf die Sollgröße des jeweils zugeordneten Reglers, d.h. er wirkt auf den am Eingang des zugeordneten Reglers anliegenden Sollwert.

Die Begrenzung der Anstiegsgeschwindigkeit des Ständerflusses wird vorzugsweise dadurch realisiert, dass für jeden Arbeitstakt der Struktur die zulässige Änderung des Ständerflusses berechnet wird, d.h. das Inkrement. Übersteigt die Differenz des Ständerflusssollwerts aus dem vorangegangenen Arbeitstakt einerseits und des Ständerflusssollwerts in dem aktuellen Arbeitstakt andererseits das Inkrement, wird der Ständerflusssollwert aus dem aktuellen Arbeitstakt so begrenzt, dass das maximal zulässige Inkrement nicht überschritten wird.

Zur Begrenzung der Fluss-Änderungsgeschwindigkeit (d.h. zur Einhaltung der maximalen Flussrampe) wird eine Begrenzungsregler-Struktur verwendet, der der gefilterte Betrag des Istwertes und ein Maximalwert der flussbildenden Komponente (d-Komponente im rotorfesten Koordinatensystem d-q) des Ständerstromes zugeführt werden. Dabei handelt es sich wie auch sonst um die grundschwingungsbezogene Komponente, also ohne Oberschwingungsanteile. Dieser Begrenzungsregler weist einen P-Regler auf, d.h. einen Regler, dessen Stellgröße proportional zu der Soll-/Istwertabweichung (hier der Differenz zwischen dem der Sollwert und dem Maximalwert der flussbildenden Komponente des Ständerstromes) am Eingang des Reglers ist.

Die Struktur ist ebenfalls ausgestaltet, die Differenz eines vorgefilterten Ist-Wertes der drehmomentbildenden Komponente (q-Komponente, grundschwingungsbezogen) des Ständerstromes und eines Maximalwertes der drehmomentbildenden Komponente (grundschwingungsbezogen) des Ständerstromes einem Proportional-, Integralregler (PI-Regler) zuzuführen, dessen Ausgang mit einem Eingang der ersten Begrenzungseinrichtung verbunden ist.

Die erfindungsgemäße Ständerstrombegrenzung ist insbesondere bei hochdynamischen Betriebszuständen der Maschine (z.B. bei dem erwähnten Wechsel von Rollen auf dynamisches Bremsen eines Fahrzeugs) anwendbar. Es können hohe Drehmomente und große Änderungen des Ständerflusses zeitgleich zugelassen werden.

Gemäß einem weiteren Gedanken der Erfindung wird bei der Berechnung des Schlupffrequenzmaximalwertes bzw. des Drehmomentmaximalwertes nicht (wie bei Maischak, s.o.) davon ausgegangen, dass die Flussänderung des magnetischen Flusses ungefähr gleich Null ist, da die damit verbundene Vernachlässigung als eine der Ursachen für die häufigen Überstromabschaltungen identifiziert wurde. Vielmehr wird unter Verwendung eines gefilterten Ist-Wertes (im Gegensatz zum von Maischak verwendeten stationären Magnetisierungsstrom) des flussbildenden Grundschwingungsstromes (d-Komponente im rotorfesten Koordinatensystem d-q) und unter Verwendung des bekannten Wertes für den Maximalwert des Gesamt- Ständerstromgrundschwingungswertes der zulässige Maximalwert des drehmomentbildenden Ständerstroms (q-Komponente im d-q-Koordinatensystem) berechnet. Daraus wird wiederum der zulässige Maximalwert der Schlupffrequenz bzw. des Drehmomentes berechnet.

Durch Verwendung des gefilterten Grundschwingungs-Istwertes anstelle des stationären Magnetisierungsstromes für die flussbildende Komponente des Ständerstromes wird die Schwierigkeit überwunden, dass Maximalwerte sowohl für die d-Komponente als auch die q-Komponente des Ständerstroms zu berechnen sind oder abzuschätzen sind, aber in der Regel keine ausreichenden Informationen hierfür zur Verfügung stehen. Würden andererseits feste, zeitkonstante Maximalwerte sowohl für die d-Komponente und für die q-Komponente verwendet, würde nicht der maximal möglich Gesamtstrombetrag des Ständerstromes genutzt, was insbesondere beim Betrieb von Schienenfahrzeugen wichtig ist.

Ausführungsbeispiele der Erfindung werden nun unter Bezugnahme auf die beigefügte Zeichnung beschrieben. Die einzelnen Figuren der Zeichnung zeigen:

Fig.1 eine Anordnung mit einer Drehstrommaschine, die von einem 3-Phasen-Stromrichter gespeist wird, wobei der Betrieb des Stromrichters und damit die Drehstrommaschine von einer Regelstruktur geregelt wird,

Fig. 2 eine Teilstruktur der Regelstruktur gemäß Fig. 1, jedoch mit einem Schlupffrequenzregler statt einem Drehmomentregler,

Fig. 3 eine bevorzugte Ausführungsform für die in Fig. 2 dargestellte Begrenzungseinrichtung zur Begrenzung der flussbildenden Ständerstromkomponente,

Fig. 4 eine bevorzugte Ausführungsform für die in Fig. 2 dargestellte Einrichtung zur Berechnung des Maximalwertes des Sollwertes der drehmomentbildenden Ständerstromkomponente,

Fig. 5 eine bevorzugte Ausführungsform für die in Fig. 2 dargestellte Begrenzungseinrichtung zur Begrenzung der drehmomentbildenden Ständerstromkomponente,

Fig. 6 eine Darstellung verschiedener Betriebssituationen, bei denen ein zu hoher Ständerstrom angefordert wird, wobei die Darstellung einen Quadranten im rotorflussfesten Koordinatensystem d-q zeigt,

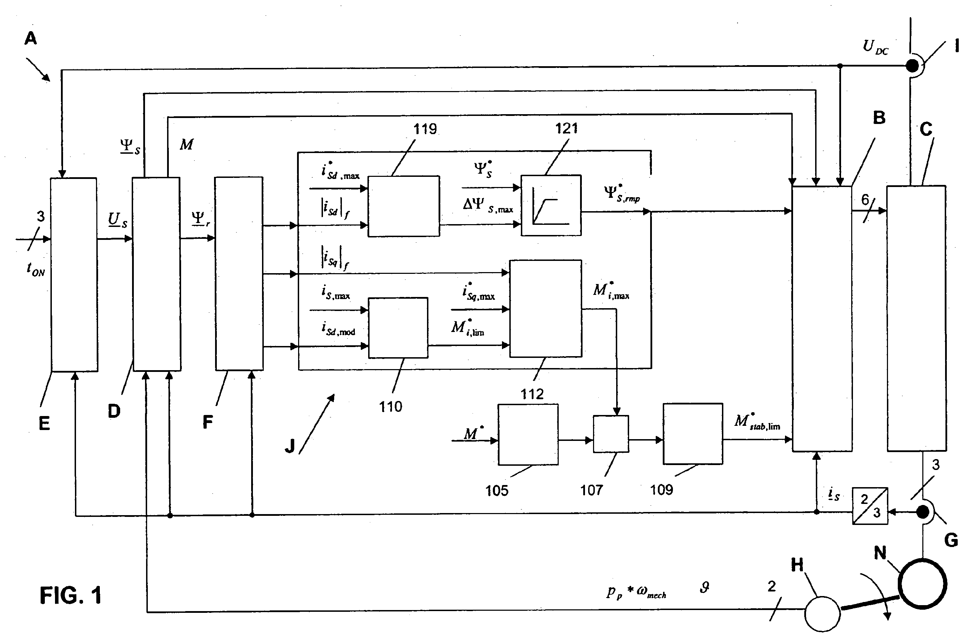

In Fig. 1 ist eine Struktur A der gesamten Antriebsregelung einer Drehstrommaschine N, die wahlweise mit oder ohne Drehzahl- bzw. Drehwinkelgeber betrieben werden kann, dargestellt. Bei der Drehstrommaschine kann es sich um eine Asynchronmaschine oder um eine Synchronmaschine, vorzugsweise mit Permanenterregung, handeln. Im Einzelnen sind dargestellt und mit den folgenden Bezugzeichen versehen: eine Einheit B, die einen Pulsmustergenerator, einen Drehmomentregler und einen Flussregler enthält, der Stromrichter C (d.h. ein 3-Phasen-Wechselrichter), der die Ansteuerimpulse von der Einheit B empfängt und dementsprechend die Maschine N über drei Phasen mit Strom versorgt, eine Einrichtung D zur Nachbildung der Flussverkettungen (Ständer- und Rotorfluss) sowie des Drehmoments (Flussbeobachter), eine Einrichtung E zur Berechnung der Ausgangsspannung des Stromrichters C, eine Einheit F, die eine Transformation von gemessenen Stromwerten von zumindest zwei der drei Phasen in das rotorflussfeste Koordinatensystem d-q und Filter zur Glättung der Stromwerte aufweist. Eine entsprechende Messeinrichtung zur Messung der Phasen-Stromwerte ist mit G bezeichnet. Die gemessenen Stromwerte werden über eine entsprechende Leitungsverbindung sowohl der Einrichtung D, der Einheit F, der Einheit E als auch der Einheit B zugeführt.

Optional ist eine Messeinrichtung H zur Messung der Drehzahl bzw. des Drehwinkels an der Maschine N vorgesehen. Das Ergebnis der Drehzahlmessung oder -schätzung bzw. Drehwinkelmessung oder -schätzung wird der Einrichtung D zugeführt.

Ferner misst eine Messeinrichtung I die Gleichspannung auf der Gleichspannungsseite des Stromrichters C und führt diese der Einheit B und der Einrichtung E zu.

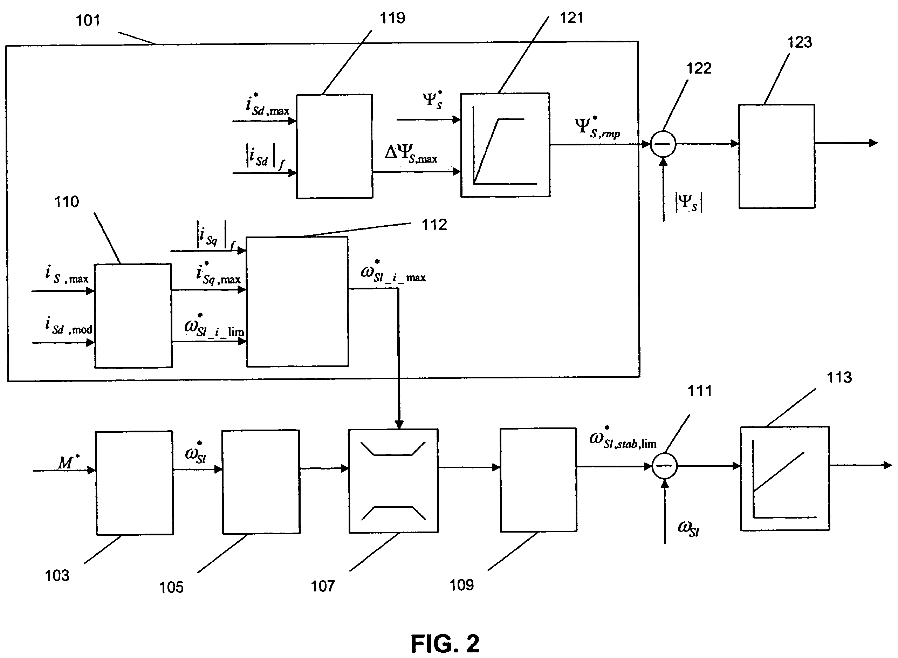

Eine bevorzugte Ausführungsform der vorliegenden Erfindung wird durch die Teilstruktur J realisiert, die in der Mitte der Fig. 1 dargestellt ist und die in einer geringfügig modifizierten Variante noch anhand von Fig. 2 näher beschrieben wird. Anhand von Fig. 1 werden lediglich die Schnittstellen zu den anderen Teilen der Struktur A beschrieben.

Die Einheit F führt der Struktur die gefilterten absoluten Beträge der Stromgrundschwingungskomponenten im rotorflussfesten Koordinatensystem d-q zu, d.h. den Betrag $|i_{Sd}|_f$ der flussbildenden Stromgrundschwingungskomponente $i_{Sd}$ und den Betrag $|i_{Sq}|_f$ der drehmomentbildenden Stromgrundschwingungskomponente $i_{sq}$. Dabei werden geglättete, d.h. gefilterte Beträge, die den Grundschwingungswerten entsprechen, von der Einheit F erzeugt und ausgegeben. Ferner gibt die Einheit F auch den vorzeichenbehafteten gefilterten Istwert der flussbildenden Stromgrundschwingungskomponente $i_{Sd,\mathrm{mod}}$ an die Teilstruktur J aus.

Ausgangsgrößen der Teilstruktur J sind die Sollwerte für die beiden in der Einheit B vorhandenen Regler, den Ständerflussregler und den Drehmomentregler. Im Fall der Variante der Teilstruktur gemäß Fig. 2 ist anstelle des Drehmomentreglers ein Schlupffrequenzregler vorgesehen. Die Teilstruktur gemäß Fig. 2 gibt daher anstelle des Drehmomentsollwertes $M^*$ einen Schlupffrequenzsollwert $\omega^*$ aus. Der Sollwert für den Ständerflussregler ist in beiden Fällen ein anstiegsbegrenzter Sollwert $\Psi_{S,rmp}^{*}$, wobei unter Anstieg auch ein Abfall verstanden wird. Anders ausgedrückt wird die Geschwindigkeit, mit der der Sollwert des Ständerflusses ansteigen oder abfallen kann, von der Teilstruktur J begrenzt.

Der Pulsmustergenerator in Einheit B kann z. B. innerhalb einer signal- oder mikroprozessorgesteuerten Signalelektronik realisiert sein. Wie in der WO 2008/052714 A1 näher beschrieben ist, kann in ihm insbesondere ein Regelverfahren mit mittelwertbasierter Pulsmustergenerierung und Dead-Beat-Verhalten der Ständerflussregelung implementiert sein. Außerdem kann er eine Implementierung eines ständerflussgeführten, augenblickswert-basierten Pulsmustergenerators enthalten. Auch bezüglich weiterer möglicher Ausgestaltungen der Struktur A wird auf die WO 2008/052714 A1 verwiesen.

Fig. 2 zeigt die erwähnte Variante der Teilstruktur J am Beispiel der vorteilhaften Ausführungsform mit unterlagerter Ständerflussregelung und Schlupffrequenzregelung gemäß Fig. 1. Eingangsgrößen der Teilstruktur sind außer den bereits anhand von Fig. 1 erwähnten gefilterten Beträgen des flussbildenden und des drehmomentbildenden Grundschwingungsstroms sowie des gefilterten Istwertes des flussbildenden Grundschwingungsstromes ein Soll-Maximalwert des flussbildenden Grundschwingungsstroms $i_{Sd,\max}^{*}$ und ein Sollwert $M^*$ des Drehmoments der Maschine N sowie der Maximalwert des Gesamt-Ständerstromgrundschwingungsbetrages $i_{S,\max}$.

Um einen links oben in Fig. 2 dargestellten Bereich der Teilstruktur ist ein rechteckiger Rahmen 101 gezogen. Dieser Bereich enthält Ausführungsformen von wesentlichen Elementen der vorliegenden Erfindung. Dazu gehören insbesondere die Begrenzungseinrichtungen für die Begrenzung sowohl des flussbildenden (d-Komponente) als auch des drehmomentbildenden (q-Komponente) Ständergrundschwingungsstroms. Die Begrenzungseinrichtung für die d-Komponente ist mit dem Bezugszeichen 119 bezeichnet, die Begrenzungseinrichtung für die q-Komponente mit dem Bezugszeichen 112.

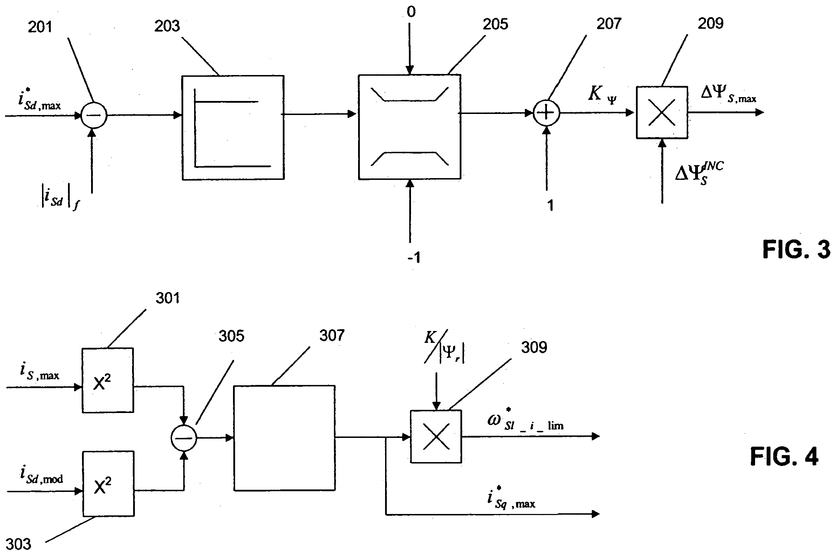

Der Begrenzungseinrichtung 119 werden der gefilterte Betrag $|i_{Sd}|_f$ des Istwertes der flussbildenden Stromgrundschwingungskomponente $i_{Sd}$ und der Soll-Maximalwert $i_{Sd,\max}^{*}$ der flussbildenden Stromgrundschwingungskomponente $i_{Sd}$ zugeführt. Wie noch näher anhand eines Ausführungsbeispiels gemäß Fig. 3 beschrieben wird, berechnet die Begrenzungseinrichtung 119 daraus das maximale Inkrement $\Delta\Psi_{S,\max}$ des Ständerflussbetrages $|\Psi_S|$. Diese Ausgangsgröße wird als eine Eingangsgröße einer Einheit 121 zugeführt. Eine weitere Eingangsgröße dieser Einheit ist der Sollwert $\Psi_S^{*}$ des Ständerflussbetrages. Daraus berechnet die Einheit 121 als Ausgangsgröße einen anstiegsbegrenzten Sollwert $\Psi_{S,rmp}^{*}$, der hinsichtlich der Anstiegsgeschwindigkeit entsprechend dem Ausgangswert der Einheit 119 begrenzt ist. Im Ergebnis wirkt die Begrenzungseinrichtung 119 lediglich begrenzend auf den Sollwert $\Psi_S^{*}$ des Ständerflussbetrages, wenn dieser die im momentanen Arbeitstakt maximal erlaubte Anstiegsgeschwindigkeit überschreiten würde.

Ein Differenzglied 122 bildet die Differenz zwischen dem begrenzten Sollwert des Ständerflussbetrages $\Psi_{S,rmp}^*$ und dem Betrag des Istwertes des Ständerflusses $|\Psi_S|$. Diese Differenz wird dem Flussregler 123 als Regelabweichung zugeführt. In der Darstellung gemäß Fig. 1 würden sich das Differenzglied 122 und der Ständerflussregler 123 innerhalb der Einheit B befinden, sind dort aber nicht dargestellt. Der Betrag des Istwertes des Ständerflusses wird der Einheit B von der Einrichtung D zugeführt.

Im unteren Teil des Bereichs 101 innerhalb der Teilstruktur, die in Fig. 2 dargestellt ist, ist eine Berechnungseinrichtung 110 dargestellt, die als Eingangswerte den Maximalwert $i_{S,max}$ des Ständerstromgrundschwingungsbetrages $i_S$ und den gefilterten Istwert $i_{Sd,mod}$ der flussbildenden Ständerstromgrundschwingungskomponente zugeführt wird. Der gefilterte Istwert $i_{Sd,mod}$ kann insbesondere auf andere Weise gefiltert werden als die Werte der flussbildenden und drehmomentbildenen Stromgrundschwingungskomponenten. Die Berechnung innerhalb der Einrichtung 110 wird gemäß den folgenden Gleichungen vorgenommen.

$$\left| i_{S,\max} \right|^2 = (i_{Sd,\mathrm{mod}})^2 + (i_{Sq,\max}^*)^2 \qquad \text{(Gl. 1)}$$

$$i_{Sq,\max}^* = \sqrt{\left( i_{S,\max} \right)^2 - i_{Sd,\mathrm{mod}}^2} \qquad \text{(Gl. 2)}$$

Gleichung 1 gibt die Beziehung zwischen dem Quadrat des Ständerstromgrundschwingungsbetrags $i_S$, d.h. dem Quadrat des Ständerstromzeigers im rotorflussfesten d-q-Koordinatensystem, einerseits und der Summe der Quadrate der ständerflussd-q-Koordinatensystem, einerseits und der Summe der Quadrate der ständerflussbildenden $i_{Sd}$ und der drehmomentbildenden $i_{Sq}$ Stromkomponente in dem d-q-Koordinatensystem wieder. Alle Größen der Gleichung 1 beziehen sich auf die Grundschwingung, d.h. ohne Oberschwingungen des Ständerstroms. Dabei sind in der Gleichung 1 die Größen eingesetzt, die die Eingangsgrößen bzw. Ausgangsgrößen der Berechnungseinrichtung 110 sind. Aufgelöst nach der Ausgangsgröße, dem Soll-Maximalwert $i_{Sq,\mathbf{max}}^*$ der drehmomentbildenden Ständerstromgrundschwingungskomponente (q-Komponente) ergibt sich Gleichung 2.

Außerdem gibt die Berechnungseinrichtung 110 einen Wert der Schlupffrequenz $\omega_{Sl\_i\_\lim}^*$ aus, der durch Multiplikation des anderen Ausgangswertes mit einem Faktor $K$ dividiert durch den Betrag des Rotorflusses $\Psi_r$ erhalten wird. Diese beiden Ausgangswerte der Berechnungseinrichtung 110 werden als Eingangswerte der Begrenzungseinrichtung 112 zur Begrenzung der drehmomentbildenden Stromgrundschwingungskomponente des Ständerstromes zugeführt. Die Begrenzungseinrichtung 112 erhält außerdem als Eingangsgröße den Betrag des gefilterten Grundschwingungsistwertes der drehmomentbildenden Stromkomponente $|i_{Sq}|_f$.

Als Ausgangsgröße erzeugt die Begrenzungseinrichtung 112 im Fall der Ausführungsform gemäß Fig. 2 den Maximalwert des Sollwertes der Schlupffrequenz $\omega_{Sl\_i\_\mathbf{max}}^*$ aus, der im momentanen Arbeitstakt maximal zulässig ist. Dieser Maximalwert wird einem Begrenzer 107 zugeführt, der die Begrenzung der Schlupffrequenz wirksam werden lässt. Darunter wird verstanden, dass der Sollwert der Schlupffrequenz $\omega_{Sl}^*$ auf den genannten Maximalwert begrenzt wird. Ist der Sollwert der Schlupffrequenz im momentanen Arbeitstakt nicht größer als der Maximalwert oder nicht kleiner als der negative Wert des Maximalwertes findet durch den Begrenzer 107 keine Veränderung des Sollwertes statt. Andernfalls wird der Sollwert auf den Maximalwert oder das Negative des Maximalwertes reduziert bzw. (Vorzeichen richtig betrachtet) erhöht.

Im Fall der Teilstruktur J gemäß Fig. 1 würde die Begrenzungseinrichtung 112 einen Maximalwert für das Drehmoment der Maschine erzeugen und an den Begrenzer 107 ausgeben.

Wie unten in Fig. 2 näher dargestellt ist, können optional weitere Begrenzungen des Drehmomentsollwertes und/oder des Schlupffrequenzsollwertes stattfinden.

Insbesondere kann in der dargestellten Einrichtung 103 eine Umrechnung des Drehmomentsollwertes $M^*$ in den Schlupffrequenzsollwert $\omega_{Sl}^*$ stattfinden und kann dieser konvertierte Wert vor seiner Zuführung zu dem Begrenzer 107, also als unbegrenzter Sollwert im Sinne der Begrenzung durch den Begrenzer 107, in Einheit 105 vorab begrenzt werden, um einen Kippschutz der Maschine, eine Leistungsbegrenzung der Maschine, eine Strombegrenzung des Stromrichtereingangsgleichstromes und/oder eine Radschlupfregelung bezüglich des an Rädern eines Schienenfahrzeuges möglichen Schlupfes zu realisieren. Prinzipiell können derartige Regelungen und Begrenzungen alternativ an dem Ausgangswert des Begrenzers 107 vorgenommen werden, jedoch ist die im Ausführungsbeispiel gemäß Fig. 2 gezeigte Reihenfolge besonders vorteilhaft.

In dem Ausführungsbeispiel gemäß Fig. 2 ist ferner eine so genannte $U_d$-Abschaltung zur Dämpfung von Schwingungen im Gleichspannungskreis auf der Gleichspannungsseite des Stromrichters C gemäß Fig. 1 in Einheit 109 realisiert. Eine genauere Beschreibung der $U_d$-Abschaltung findet sich z.B. in der DE 4110225. Der Ausgangswert der Einheit 109 (falls vorhanden) oder der Ausgangswert des Begrenzers 107 wird einem Differenzglied 111 zugeführt, das die Differenz zu dem Istwert der Schlupffrequenz $\omega_{Sl}$ bildet und die Differenz als Reglerabweichung dem Schlupffrequenzregler 113 zuführt. Das Differenzglied 111 und der Schlupffrequenzregler 113 würden sich bei der Variante mit Schlupffrequenzregler in Block B in Fig. 1 befinden. Im Fall des Drehmomentreglers gibt der Begrenzer 107 entsprechend einen begrenzten Sollwert des Drehmoments aus, bildet das Differenzglied 111 die Differenz zu dem Istwert des Drehmoments und führt die Differenz als Eingangsreglerabweichung dem Drehmomentregler zu.

Fig. 3 zeigt eine bevorzugte Ausführungsform für die in Fig. 1 dargestellte Begrenzungseinrichtung 119 zur Begrenzung der flussbildenden Ständerstromgrundschwingungskomponente $i_{Sd}$. Die Begrenzungseinrichtung bewirkt die Begrenzung, indem die Anstiegsgeschwindigkeit des magnetischen Flusses begrenzt wird. Als Eingangsgrößen werden der Struktur der absolute Betrag $|i_{Sd}|_f$ des gefilterten Ist-Wert des flussbildenden Stromes (d-Komponente der Ständerstromgrundschwingung) und der Maximalwert $i^*_{Sd,max}$ des flussbildenden Grundschwingungsstromes zugeführt.

Der hochgestellte Stern in dem Symbol bedeutet (wie auch sonst in dieser Beschreibung), dass der Wert ein Sollwert ist. Diese beiden Eingangsgrößen werden in dem Differenzglied 201 voneinander abgezogen und die Differenz wird dem Proportionalregler 203 als Eingangssignal zugeführt. Durch den Proportionalitätsfaktor, der mit der Eingangsdifferenz multipliziert wird, wird in dem Ausführungsbeispiel eine Normierung der Größe bewirkt. Der Ausgangswert des Reglers wird einem Begrenzungsglied 205 zugeführt, das diesen Eingangswert nach oben auf den Wert 0 und nach unten auf den Wert -1 begrenzt. Der am Ausgang des Begrenzungsgliedes 205 zur Verfügung stehende begrenzte Wert wird gemäß der dargestellten optionalen Ausführungsform der Einheit 207 zugeführt, die den im Bereich von -1 bis 0 liegenden normierten Wert um eins erhöht, so dass er im Bereich von 0 bis 1 liegt. Der so erhaltene Wert ist in Fig. 3 mit dem Symbol $K_\psi$ bezeichnet. Er wird einem Multiplizierer 209 als ein erstes Eingangssignal zugeführt. Ein weiteres, zweites Eingangssignal des Multiplizierers 209 ist das maximale Inkrement des Ständerflussbetrages $\Delta\Psi_S^{INC}$, ein vorgegebener Parameter. Als Ergebnis erhält man als Ausgangssignal der Begrenzungseinrichtung 119 in der in Fig. 2 dargestellten Ausführungsform den Maximalwert $\Delta\Psi_{S,max}$ des Inkrements des Ständerflussbetrages für den aktuellen Arbeitstakt. Die Wirkungsweise dieses Maximalwertes $\Delta\Psi_{S,max}$ wurde anhand von Fig. 1 beschrieben.

Fig. 4 zeigt eine Ausführungsform der Berechnungseinrichtung 110 gemäß Fig. 2. Die beiden Eingangswerte werden jeweils einem Quadrierer 301 bzw. 303 zugeführt, der die Eingangswerte gemäß Gleichung 1 bzw. Gleichung 2 quadriert. Die quadrierten Werte werden einem Differenzglied 305 zugeführt, das gemäß Gleichung 2 das Argument der Quadratwurzel auf der rechten Seite der Gleichung berechnet. Dieses Argument wird einer Einrichtung zur Berechnung der Quadratwurzel 307 zugeführt, die das Ergebnis der rechten Seite der Gleichung 2 berechnet. Am Ausgang der Berechnungseinrichtung 307 steht daher der erste Ausgangswert der Berechnungseinrichtung 110, nämlich der maximale Sollwert der drehmomentbildenden Stromgrundschwingungskomponente $i^*_{Sq,max}$ zur Verfügung. Wie bereits beschrieben, wird dieser erste Ausgangswert durch Multiplikation mit dem Faktor $K$ dividiert durch den Betrag des Rotorflusses $|\Psi_r|$ in den entsprechenden Wert der Schlupffrequenz umgerechnet. Die entsprechende Multipliziereinrichtung ist mit dem Bezugszeichen 309 bezeichnet. Der genannte Faktor $K$ ist eine Zusammenfassung von Größen. Die folgende Gleichung 3 gibt die Beziehung zwischen den beiden Ausgangsgrößen der Berechnungseinrichtung 110 und somit auch die den Faktor $K$ bildenden Größen wieder:

$$\omega^*_{Sl\_i\_\lim} = R'_r \cdot \frac{L_s}{L_s + L'_\sigma} \cdot \frac{1}{|\Psi_r|} \cdot i^*_{Sq,max} \quad \text{(Gl. 3)}$$

Dabei bedeuten: $R'_r$ den ins Gamma Ersatzschaltbild transformierten Rotorwiderstand, $L_S$ die Induktivität der Ständerwicklung, $L'_\sigma$ die Streuinduktivität des Gamma Ersatzschaltbildes der Asynchronmaschine.

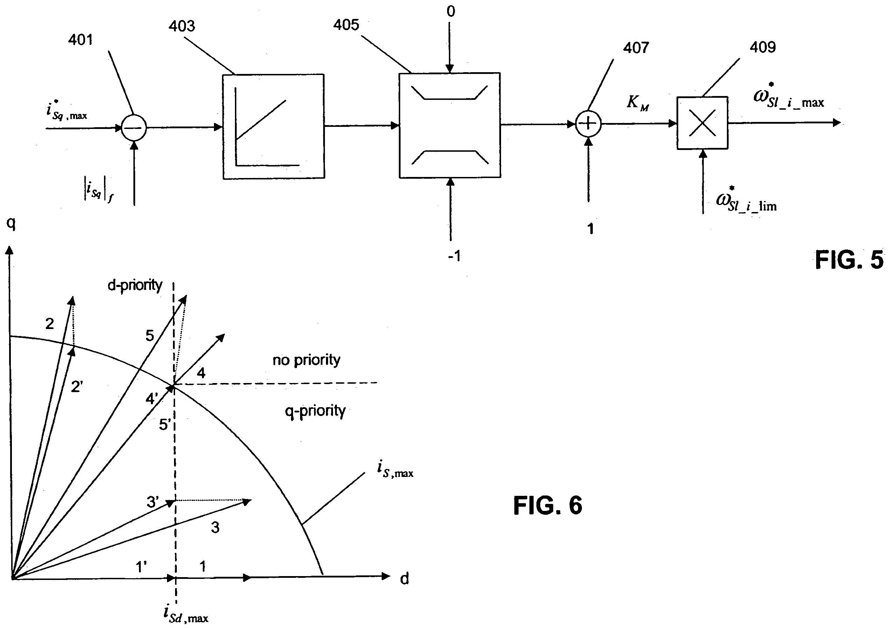

Fig. 5 zeigt eine Ausführungsform der Begrenzungseinrichtung 112 gemäß Fig. 2. Der Begrenzungseinrichtung 112 werden wie erwähnt als Eingangsgrößen der Maximal-Sollwert $i^*_{Sq,max}$ der der drehmomentbildenden Komponente (q-Komponente) des Ständergrundschwingungsstromes und der gefilterte Betrag des Grundschwingungsistwertes $|i_{Sq}|_f$ dieser Komponente zugeführt. Ein Differenzglied 401 bildet die Differenz der Eingangsgrößen und führt die Differenz als Regelabweichung einem Regler 403 zu, bei dem es sich in dem Ausführungsbeispiel um einen PI-Regler handelt. Im Gegensatz zu der Verwendung eines P-Reglers zur Begrenzung der flussbildenden Stromkomponente (siehe Fig. 3) wird für die Begrenzung der drehmomentbildenden Stromkomponente ein PI-Regler mit zusätzlichem Integralanteil bevorzugt. Der Ausgangswert des Reglers 403 wird einem Begrenzer 405 zugeführt, der den aufgrund des entsprechend gewählten Proportionalitätsfaktors des Reglers 403 normierten Ausgangswert des Reglers im Bereich von -1 bis 0 begrenzt. Der so begrenzte Ausgangswert des Begrenzers 405 wird einem Summierer 407 zugeführt, der den Wert 1 addiert, so dass der Ausgangswert des Summierers 401, der mit $K_M$ bezeichnet ist, auf den Wertebereich 0 bis 1 begrenzt ist. Durch einen Multiplizierer 409 wird dieser Wert $K_M$ durch den nachgeschalteten Multiplizierer 409 mit dem zweiten Ausgangswert der Berechnungseinrichtung 110, dem maximalen Sollwert $\omega^{*}_{Sl\_i\_\mathrm{lim}}$ der Schlupffrequenz multipliziert, so dass ein entsprechender begrenzter maximaler Sollwert $\omega^{*}_{Sl\_i\_\mathrm{max}}$ der Schlupffrequenz als Ausgangswert erhalten wird. Wie anhand von Fig. 2 beschrieben wurde, wird dieser Ausgangswert dem Begrenzer 107 zugeführt.

Fig. 6 zeigt den ersten Quadranten des rotorfesten Koordinatensystems d-q. Entlang der horizontalen Achse, der d-Achse, nimmt daher die flussbildende bzw. magnetisierende Stromkomponente des Ständerstroms $i_{Sd}$ zu. Entlang der q-Achse, der vertikalen Achse, nimmt die Komponente des drehmomentbildenden Ständerstroms $i_{Sq}$ zu.

Der Viertelkreis in dem Quadranten, dessen Mittelpunkt im Ursprung des Koordinatensystems d-q liegt, entspricht dem zulässigen Maximalwert des Gesamt-Ständerstromgrundschwingungswertes $i_{S,\mathrm{max}}$. Keiner der Stromraumzeiger (auch als Stromvektor bezeichnet), die sich von dem Ursprung ausgehend durch den Quadranten erstrecken und die jeweils einer Anforderung eines Stroms entsprechen, darf sich daher über den Viertelkreis hinaus erstrecken. Bei den mit den Ziffern 2, 4 und 5 bezeichneten Stromzeigern ist dies der Fall. Daher greift die erfindungsgemäße Begrenzungsregelung ein und reduziert diese Stromraumzeiger, wie noch näher beschrieben wird. Dabei kann nicht nur der Betrag des jeweiligen Stromraumzeigers verändert werden, sondern je nach Betriebssituation auch dessen Richtung.

Außerdem existiert ein Maximalwert für die flussbildende Stromgrundschwingungskomponente des Ständerstroms, der in der Figur durch eine vertikale, gestrichelte Linie dargestellt ist. Der Maximalwert ist durch das Symbol $i_{Sd,\mathrm{max}}$ bezeichnet. Zwei der Stromzeiger, die mit den Ziffern 1 und 3 gekennzeichnet sind, enden zwar innerhalb des Viertelkreises des maximal zulässigen Gesamtstromgrundschwingungsbetrages $i_{S,\mathrm{max}}$.

Sie ragen jedoch über die vertikale, gestrichelte Linie an der Stelle $i_{Sd,\mathrm{max}}$ hinaus, d.h. überschreiten den Grenzwert für den maximal zulässigen flussbildenden Grundschwingungsstrom. Wie noch näher ausgeführt wird, werden diese Stromraumzeiger allein durch Reduktion der flussbildenden Stromkomponente $i_{Sd}$ auf einen zulässigen Stromraumzeiger begrenzt.

Außer dem Maximalwert für den Gesamt-Ständerstromgrundschwingungsbetrag existiert, wie in Fig. 6 dargestellt, auch ein Maximalwert für die flussbildende Stromkomponente $i_{Sd}$. Gemäß der bevorzugten Ausgestaltung der Erfindung wird die Einhaltung des Grenzwertes während Flussänderungen durch einen separaten Begrenzungsregler gewährleistet (siehe Fig. 2 und 3). Bedingt durch die Funktionsweise dieses Begrenzungsreglers (im Ausführungsbeispiel der Fig. 3 mit einem P-Regler) kann der Grenzwert jedoch zeitweise zumindest geringfügig überschritten werden.

Im Folgenden werden nun die verschiedenen durch zu hohe Stromanforderung hervorgerufenen Situationen gemäß Fig. 6 diskutiert. Im Fall des Stromraumzeigers 1 wird ein Strom angefordert, der ausschließlich eine flussbildende Stromkomponente enthält. Zwar befindet sich die Spitze des angeforderten Stromraumzeigers innerhalb des Viertelkreises, d.h. der Gesamt-Ständerstromgrundschwingungs-Maximalwert ist nicht überschritten, jedoch ist der Grenzwert für die flussbildende Grundschwingungskomponente des Stroms $i_{Sd,\mathrm{max}}$ überschritten. Daher wird durch die Funktionsweise des separaten Reglers der Strom entsprechend auf den mit 1' bezeichneten Stromvektor reduziert.

Einen ähnlichen Fall stellen die Stromraumzeiger dar, die mit den Symbolen 3 und 3' bezeichnet sind. Dieser Fall unterscheidet sich nur dadurch von dem Fall 1, dass beide Stromraumzeiger, der zu hohe angeforderte und der reduzierte Stromraumzeiger, auch eine drehmomentbildende Stromkomponente aufweisen. Diese drehmomentbildende Stromkomponente bleibt gleich, d.h. wird von der Veränderung des Stromzeigers nicht betroffen. Lediglich wird durch Begrenzung der flussbildenden Komponente bewirkt, dass die flussbildende Komponente des reduzierten Stromvektors nicht mehr den Grenzwert $i_{Sd,\mathrm{max}}$ überschreitet. Die Fälle 1 und 3 weisen einen angeforderten Stromvektor auf, dessen Spitze sich in einem Bereich des ersten Quadranten des d-q-Koordinatensystems befindet, die mit "q-priority" bezeichnet ist. Wie soeben beschrieben wurde, ist bei der Reduzierung des angeforderten Stromvektors auf einen zulässigen Stromvektor die q-Komponente, d.h. die drehmomentbildende Stromkomponente $i_{Sq}$, nicht betroffen. Sie hat daher Priorität gegenüber der flussbildenden Stromkomponente $i_{Sd}$. Dieser Bereich mit q-Priorität endet links an dem Maximalwert für die flussbildende Stromkomponente $i_{Sd,\mathrm{max}}$. Oben endet dieser Bereich mit q-Priorität an der horizontalen Linie, die durch den Schnittpunkt der Maximalwertlinie von $i_{Sd,\mathrm{max}}$ mit dem Viertelkreis verläuft. Unmittelbar über den Bereich mit q-Priorität, ebenfalls rechts der vertikalen, gestrichelten Linie für $i_{Sd,max}$, befindet sich ein Bereich ohne Priorität. Liegt die Spitze eines angeforderten Stromraumzeigers in diesem Bereich, wird der Stromraumzeiger unter Veränderung sowohl der d-Komponente als auch der q-Komponente des Ständerstroms reduziert. Diese Art der Begrenzung von Raumzeigern wird auch als winkelrichtige Begrenzung bezeichnet. Dem entsprechen in der Darstellung von Fig. 6 zwei Beispielfälle. Im Fall des angeforderten Stromraumzeigers 4 kreuzt dieser Stromraumzeiger den Viertelkreis des Maximalwerts $i_{S,max}$ des Gesamtständerstroms genau an der Grenzlinie des Bereichs mit q-Priorität und des Bereichs mit keiner Priorität ("no priority"). Da durch die Begrenzung auf den Maximalwert des flussbildenden Stromes und durch Begrenzung auf den Maximalwert des Gesamtständerstroms ein Stromraumzeiger erzielt wird, der genau an diesem Schnittpunkt des Stromraumzeigers 4 mit dem Viertelkreis endet, wird im Fall 4 keine Richtungsänderung, also wie oben erwähnt eine winkelrichtige Begrenzung, an dem Stromzeiger vorgenommen.

Dagegen findet im Fall des Stromraumzeigers 5 wiederum eine solche Richtungsänderung statt. Der Stromraumzeiger 5 wird ebenfalls auf den zulässigen Stromraumzeiger reduziert, der an dem Schnittpunkt der Grenzlinie der beiden genannten Prioritätsbereiche bzw. des Bereichs mit keiner Priorität und dem Viertelkreis endet. Dieser dort endende Pfeil ist daher mit den Bezugszeichen 4' und 5' bezeichnet.

Oberhalb des Viertelkreises und links von dem Maximalwert für die flussbildende Stromkomponente $i_{Sd,max}$ befindet sich der Bereich mit "d-Priorität" (in der Darstellung als "d-priority" bezeichnet). Dort endet im Ausführungsbeispiel der geforderte Stromvektor 2. Er wird mit Hilfe der erfindungsgemäßen Begrenzungsregelung automatisch so auf einen zulässigen Stromvektor 2' reduziert, der dieselbe flussbildende Stromkomponente $i_{Sd}$ hat, jedoch eine entsprechend dem zulässigen Gesamt-Ständerstromgrundschwingungs-maximalwert reduzierte drehmomentbildende Stromkomponente hat. Da also keine Reduktion der flussbildenden Stromkomponente stattfindet, wird dieser Bereich zutreffend als Bereich mit d-Priorität bezeichnet.

## Patentansprüche

1.  Steuer- und/oder Regeleinrichtung zum Betreiben einer Drehstrommaschine (N), die von einem 3-Phasen-Stromrichter (C) gespeist wird, wobei

    • die Einrichtung eine Struktur (A), nämlich eine Steuer- und/oder Regelstruktur aufweist,
    • die Struktur (A) einen Ständerflussregler (123) und einen Schlupffrequenzregler (113) oder die Struktur (A) einen Ständerflussregler (123) und einen Drehmomentregler aufweist,
    • die Struktur (A) eine erste Begrenzungseinrichtung (107) aufweist, die ausgestaltet ist, zur Begrenzung einer drehmomentbildenden Grundschwingungsstrom-Komponente ($i_{Sq}$) des Ständerstromes ($i_S$), d.h. des Stromes durch den Ständer der Maschine (N), einen dem Schlupffrequenzregler (113) oder dem Drehmomentregler zugeführten Sollwert ($\omega_{Sl}^{*}$) auf einen Schlupffrequenzmaximalwert ($\omega_{Sl\_i\_max}^{*}$) oder Drehmomentmaximalwert zu begrenzen,
    • die Struktur (A) eine zweite Begrenzungseinrichtung (121) aufweist, die ausgestaltet ist, zur Begrenzung einer flussbildenden Grundschwingungsstrom-Komponente ($i_{Sd}$) des Ständerstromes ($i_S$) die Geschwindigkeit, mit der sich ein dem Ständerflussregler (123) zugeführter Sollwert ändert, auf einen Maximalwert ($\Delta\Psi_{S,max}$) zu begrenzen,
    • die Struktur (A) ausgestaltet ist, den Schlupffrequenzmaximalwert ($\omega_{Sl\_i\_max}^{*}$) oder Drehmomentmaximalwert abhängig von

        - einem vorgegebenen Strommaximalwert ($i_{S,max}$) für einen Ständerstromgrundschwingungsbetrag des Ständerstromes,
        - einem durch Filterung von gemessenen Stromwerten des Ständerstroms ($i_S$) gebildeten Ist-Wert ($i_{Sd,mod}$) entsprechend der flussbildenden Grundschwingungsstrom-Komponente des Ständerstroms ($i_S$) und
        - einem durch Filterung von gemessenen Stromwerten des Ständerstroms ($i_S$) gebildeten Ist-Wert ($|i_{Sq}|_f$) entsprechend der drehmomentbildenden Grundschwingungsstrom-Komponente des Ständerstroms ($i_S$)

    zu berechnen,

    wobei die Struktur ausgestaltet ist, eine erste Differenz, die eine Differenz des durch Filterung von gemessenen Stromwerten des Ständerstroms ($i_S$) gebildeten Ist-Wertes ($|i_{Sq}|_f$) entsprechend der drehmomentbildenden Grundschwingungsstrom-Komponente des Ständerstroms ($i_S$) und eines aus dem vorgegebenen Strommaximalwert

($i_{S,\max}$) und einem gefilterten Ist-Wert ($i_{Sd,\mathrm{mod}}$) der flussbildenden Grundschwingungsstrom-Komponente des Ständerstroms gebildeten Maximalwertes ($i_{Sq,\max}$) der drehmomentbildenden Grundschwingungsstrom-Komponente des Ständerstromes ist, einer ersten Regeleinrichtung (401 - 409) mit einem Proportional-, Integralregler (403) zuzuführen und

wobei die Struktur ausgestaltet ist, eine zweite Differenz, die eine Differenz eines durch Filterung von gemessenen Stromwerten des Ständerstroms ($i_S$) gebildeten Ist-Wert ($|i_{Sd}|_f$) entsprechend der flussbildenden Grundschwingungsstrom-Komponente des Ständerstroms ($i_S$) und eines Maximalwertes ($i_{Sd,\max}$) der flussbildenden Grundschwingungsstrom-Komponente des Ständerstromes ist, einer zweiten Regeleinrichtung (201 - 209) mit einem Proportionalregler (203) zuzuführen, wobei ein Ausgang der ersten Regeleinrichtung (401 - 409) mit einem Eingang der ersten Begrenzungseinrichtung (107) verbunden ist und

wobei ein Ausgang der zweiten Regeleinrichtung (201 - 209) mit einem Eingang der zweiten Begrenzungseinrichtung (121) verbunden ist.

**2.** Steuer- und/oder Regeleinrichtung nach Anspruch 1, wobei die Drehstrommaschine (N) eine Asynchronmaschine ist und wobei die Struktur (A) den Ständerflussregler (123) und den Schlupffrequenzregler (113) aufweist.

**3.** Verfahren zum Betreiben einer Drehstrommaschine (N), die von einem 3-Phasen-Stromrichter (C) gespeist wird, unter Verwendung eines Ständerflussreglers (123) und eines Schlupffrequenzreglers (113) oder unter Verwendung eines Ständerflussreglers (123) und eines Drehmomentreglers, wobei

• zur Begrenzung der drehmomentbildenden Grundschwingungsstrom-Komponente des Ständerstromes, d.h. des Stromes durch den Ständer der Maschine (N), ein dem Schlupffrequenzregler (113) oder dem Drehmomentregler zugeführter Sollwert ($\omega_{Sl}^{*}$) auf einen Schlupffrequenzmaximalwert ($\omega_{Sl\_i\_\max}^{*}$) oder Drehmomentmaximalwert begrenzt wird,
• zur Begrenzung der flussbildenden Grundschwingungsstrom-Komponente des Ständerstromes die Geschwindigkeit, mit der sich ein dem Ständerflussregler (123) zugeführter Sollwert ($\Psi_{S}^{*}$) ändert, auf einen Maximalwert ($\Delta\Psi_{S,\max}$) begrenzt wird,
• der Schlupffrequenzmaximalwert ($\omega_{Sl\_i\_\max}^{*}$) oder Drehmomentmaximalwert abhängig von

- einem vorgegebenen Strommaximalwert ($i_{S,\max}$) für einen Ständerstromgrundschwingungsbetrag des Ständerstromes,
- einem durch Filterung von gemessenen Stromwerten des Ständerstroms ($i_S$) gebildeten Ist-Wert ($i_{Sd,\mathrm{mod}}$) entsprechend der flussbildenden Grundschwingungsstrom-Komponente des Ständerstroms ($i_S$) und
- einem durch Filterung von gemessenen Stromwerten des Ständerstroms ($i_S$) gebildeten Ist-Wert ($|i_{Sq}|_f$) entsprechend der drehmomentbildenden Grundschwingungsstrom-Komponente des Ständerstroms ($i_S$)

berechnet wird und

wobei eine erste Differenz, die eine Differenz des durch Filterung von gemessenen Stromwerten des Ständerstroms ($i_S$) gebildeten Ist-Wertes ($|i_{Sq}|_f$) entsprechend der drehmomentbildenden Grundschwingungsstrom-Komponente des Ständerstroms ($i_S$) und eines aus dem vorgegebenen Strommaximalwert ($i_{S,\max}$) und einem gefilterten Ist-Wert ($i_{Sd,\mathrm{mod}}$) der flussbildenden Grundschwingungsstrom-Komponente des Ständerstroms gebildeten Maximalwertes ($i_{Sq,\max}$) der drehmomentbildenden Grundschwingungsstrom-Komponente ist, einer ersten Regeleinrichtung (401 - 409) mit einem Proportional- , Integralregler (403) zugeführt wird und

wobei eine zweite Differenz, die eine Differenz eines durch Filterung von gemessenen Stromwerten des Ständerstroms ($i_S$) gebildeten Ist-Wertes ($|i_{Sd}|_f$) entsprechend der flussbildenden Grundschwingungsstrom-Komponente des Ständerstroms ($i_S$) und eines Maximalwertes ($i_{Sd,\max}$) der flussbildenden Grundschwingungsstrom-Komponente des Ständerstromes ist, einer zweiten Regeleinrichtung (201 - 209) mit einem Proportionalregler (203) zugeführt wird, wobei ein Ausgangswert der ersten Regeleinrichtung (401 - 409) einem Eingang einer ersten Begrenzungseinrichtung (107) zur Begrenzung der drehmomentbildenden Grundschwingungsstrom-Komponente ($i_{Sq}$) des Ständerstromes zugeführt wird und

wobei ein Ausgangswert der zweiten Regeleinrichtung (201 - 209) einem Eingang einer zweiten Begrenzungseinrichtung (121) zur Begrenzung der flussbildenden Grundschwingungsstrom-Komponente des Ständerstromes zugeführt wird.

4. Verfahren nach Anspruch 3, wobei die Drehstrommaschine (N) eine Asynchronmaschine ist und wobei die Maschine unter Verwendung des Ständerflussreglers (123) und des Schlupffrequenzreglers (113) gesteuert und/oder geregelt wird.

**Claims**

1. An open-loop and/or closed-loop control device for operating a rotary current machine (N), which is fed by a 3-phase converter (C), wherein

   • the device comprises a structure (A), specifically an open-loop and/or closed-loop control structure,
   • the structure (A) comprises a stator flux controller (123) and a slip frequency controller (113) or the structure (A) comprises a stator flux controller (123) and a torque controller,
   • the structure (A) comprises a first limiter (107), which is adapted to limit a setpoint value $( \omega_{Sl}^{*} )$ fed to the slip frequency controller (113) or the torque controller to a slip frequency maximum value $( \omega_{Sl\_i\_\max}^{*} )$ or torque maximum value in order to limit a torque-forming fundamental oscillation current component $(i_{Sq})$ of the stator current $(i_S)$, i.e. the current through the stator of the machine (N),
   • the structure (A) comprises a second limiter (121), which is adapted to limit the speed at which a setpoint value fed to the stator flux controller (123) changes to a maximum value $(\Delta\Psi_{S,\max})$ in order to limit a flux-forming fundamental oscillation current component $(i_{Sd})$ of the stator current $(i_S)$,
   • the structure (A) is adapted to calculate the slip frequency maximum value $( \omega_{Sl\_i\_\max}^{*} )$ or torque maximum value depending on

      - a predefined current maximum value $(i_{S,max})$ for a stator current fundamental oscillation value of the stator current,
      - an actual value $(i_{Sd,mod})$ formed by filtering measured current values of the stator current $(i_S)$ in accordance with the flux-forming fundamental oscillation current component of the stator current $(i_S)$ and
      - an actual value $(|i_{Sd}|_f)$ formed by filtering measured current values of the stator current $(i_S)$ in accordance with the flux-forming fundamental oscillation current component of the stator current $(i_S)$,

   wherein the structure is adapted to feed a first difference which is a difference of the actual value $(|i_{Sq}|_f)$ formed by filtering measured current values of the stator current $(i_S)$ in accordance with the torque-forming fundamental oscillation component of the stator current $(i_S)$ and a maximum value $(i_{Sq,max})$ of the torque-forming fundamental oscillation current component of the stator current formed by the predefined maximum current value $(i_{S,max})$ and a filtered actual value $(i_{Sd,mod})$ of the flux-forming fundamental oscillation current component of the stator current to a first closed-loop control device (401 - 409) with a proportional, integral controller (403) and wherein the structure is adapted to feed a second difference, which is a difference of an actual value $(|i_{Sd}|_f)$ formed by filtering measured current values of the stator current $(i_S)$ in accordance with the flux-forming fundamental oscillation current component of the stator current $(i_S)$ and a maximum value $(i_{Sd,max})$ of the flux-forming fundamental oscillation current component of the stator current to a second closed-loop control device (201 - 209) with a proportional controller (203), wherein an output of the first closed-loop control device (401 - 409) is connected to an input of the first limiter (107) and wherein an output of the second closed-loop control device (201 - 209) is connected to an input of the second limiter (121).

2. The open-loop and/or closed-loop control device according to claim 1, wherein the rotary current machine (N) is an asynchronous machine, and wherein the structure (A) comprises the stator flux controller (123) and the slip frequency controller (113).

3. A method for operating a rotary current machine (N), which is fed by a 3-phase converter (C), with use of a stator flux controller (123) and a slip frequency controller (113) or with use of a stator flux controller (123) and a torque controller, wherein

   • a setpoint value $( \omega_{Sl}^{*} )$ fed to the slip frequency controller (113) or the torque controller is limited to a slip frequency maximum value $( \omega_{Sl\_i\_\max}^{*} )$ or torque maximum value in order to limit the torque-forming fundamental oscillation current component of the stator current, i.e. the current through the stator of the machine (N),

- the speed at which a setpoint value ($\Psi_S^*$) fed to the stator flux controller (123) changes is limited to a maximum value ($\Delta\Psi_{S,max}$) in order to limit the flux-forming fundamental oscillation current component of the stator current,
- the slip frequency maximum value ($\omega_{Sl\_i\_max}^*$) or torque maximum value is calculated depending on

  - a predefined current maximum value ($i_{S,max}$) for a stator current fundamental oscillation value of the stator current and
  - an actual value ($i_{Sd,mod}$) formed by filtering measured current values of the stator current ($i_S$) in accordance with the flux-forming fundamental oscillation current component of the stator current ($i_S$) and
  - an actual value ($|i_{Sq}|_f$) formed by filtering measured current values of the stator current ($i_S$) in accordance with the torque-forming fundamental oscillation component of the stator current ($i_S$) and

wherein a first difference, which is a difference of the actual value ($|i_{Sq}|_f$) formed by filtering measured current values of the stator current ($i_S$) in accordance with the torque-forming fundamental oscillation component of the stator current ($i_S$) and a maximum value ($i_{Sq,max}$) of the torque-forming fundamental oscillation current component formed by the predefined maximum current value ($i_{S,max}$) and a filtered actual value ($i_{Sd,mod}$) of the flux-forming fundamental oscillation current component of the stator current is fed to a first closed-loop device (401 - 409) with a proportional, integral controller (403) and wherein a second difference, which is a difference of the actual value ($|i_{Sd}|_f$) formed by filtering measured current values of the stator current ($i_S$) in accordance with the flux-forming fundamental oscillation current component of the stator current ($i_S$) and a maximum value ($i_{Sd,max}$) of the flux-forming fundamental oscillation current component of the stator current, is fed to a second closed-loop control device (201 - 209) with a proportional controller (203) and wherein an output value of the first closed-loop control device (401 - 409) is fed to an input of the first limiter (107) in order to limit the torque-forming fundamental oscillation current component ($i_{Sq}$) of the stator current and wherein an output value of the second closed-loop control device (201 - 209) is fed to an input of a second limiter (121) in order to limit the flux-forming fundamental oscillation current component of the stator current.

**4.** The method according to claim 3, wherein the rotary current machine (N) is an asynchronous machine, and wherein the machine is controlled by open-loop and/or closed-loop control with use of the stator flux controller (123) and the slip frequency controller (113).

**Revendications**

**1.** Dispositif de commande et/ou de réglage pour faire fonctionner une machine à courant triphasé (N), qui est alimentée par un convertisseur triphasé (C), dans lequel

- le dispositif présente une structure (A), à savoir une structure de commande et/ou de réglage,
- la structure (A) présente un régulateur de flux de stator (123) et un régulateur de fréquence de glissement (113) ou la structure (A) présente un régulateur de flux de stator (123) et un régulateur de couple de rotation,
- la structure (A) présente un premier dispositif de limitation (107) qui est configuré pour la limitation d'une composante de courant de fréquence fondamentale générant un couple de rotation ($i_{Sq}$) du courant de stator ($i_S$), c'est-à-dire du courant à travers le stator de la machine (N), pour limiter une valeur théorique ($\omega_{Sl}^*$) fournie au régulateur de fréquence de glissement (113) ou au régulateur de couple de rotation à une valeur maximale de fréquence de glissement ($\omega_{Sl\_i\_max}^*$) ou à une valeur maximale de couple de rotation,
- la structure (A) présente un deuxième dispositif de limitation (121) qui est configuré pour la limitation d'une composante de courant de fréquence fondamentale générant un flux ($i_{Sd}$) du courant de stator ($i_S$) pour limiter la vitesse à laquelle une valeur théorique fournie au régulateur de flux de stator (123) se modifie à une valeur maximale ($\Delta\Psi_{S,max}$),
- la structure (A) est configurée pour calculer la valeur maximale de fréquence de glissement ($\omega_{sl\_i\_max}^*$) ou la valeur maximale de couple de rotation en fonction

d'une valeur maximale de courant prédéfinie ($i_{S,max}$) pour une amplitude de fréquence fondamentale de courant de stator du courant de stator,
d'une valeur réelle ($i_{Sd,mod}$) générée par filtrage de valeurs de courant mesurées du courant de stator ($i_S$) conformément à la composante de courant de fréquence fondamentale générant un flux du courant de stator ($i_S$) et
d'une valeur réelle ($|i_{Sq}|_f$) générée par filtrage de valeurs de courant mesurées du courant de stator ($i_S$) conformément à la composante de courant de fréquence fondamentale générant un couple de rotation du courant de stator ($i_\mathrm{S}$), dans lequel la structure est configurée pour fournir une première différence, qui est une différence de la valeur réelle ($|i_{Sq}|_f$) générée par filtrage de valeurs de courant mesurées du courant de stator ($i_\mathrm{S}$), conformément à la composante de courant de fréquence fondamentale générant un couple de rotation du courant de stator ($i_\mathrm{S}$) et d'une valeur maximale ($i_{Sq,max}$), générée à partir de la valeur maximale de courant prédéfinie ($i_{S,max}$) et d'une valeur réelle ($i_{Sd,mod}$) filtrée de la composante de courant de fréquence fondamentale générant un flux du courant de stator, de la composante de courant de fréquence fondamentale générant un couple de rotation du courant de stator, à un premier dispositif de réglage (401-409) avec un régulateur proportionnel-intégral (403) et

dans lequel la structure est configurée pour fournir une deuxième différence, qui est une différence d'une valeur réelle ($|i_{Sd}|_f$), générée par filtrage de valeurs de courant mesurées du courant de stator ($i_\mathrm{S}$), conformément à la composante de courant de fréquence fondamentale générant un flux du courant de stator ($i_\mathrm{S}$) et d'une valeur maximale ($i_{Sd,max}$) de la composante de courant de fréquence fondamentale générant un flux, à un deuxième dispositif de réglage (201-209) avec un régulateur proportionnel (203),

dans lequel une sortie du premier dispositif de réglage (401-409) est reliée à une entrée du premier dispositif de limitation (107) et

dans lequel une sortie du deuxième dispositif de réglage (201-209) est reliée à une entrée du deuxième dispositif de limitation (121).

2. Dispositif de commande et/ou de réglage selon la revendication 1, dans lequel la machine à courant triphasé (N) est une machine asynchrone et dans lequel la structure (A) présente le régulateur de flux de stator (123) et le régulateur de fréquence de glissement (113).

3. Procédé pour faire fonctionner une machine à courant triphasé (N), qui est alimentée par un convertisseur triphasé (C), en utilisant un régulateur de flux de stator (123) et un régulateur de fréquence de glissement (113) ou en utilisant un régulateur de flux de stator (123) et un régulateur de couple de rotation, dans lequel

- pour la limitation de la composante de courant de fréquence fondamentale générant un couple de rotation du courant de stator, c'est-à-dire du courant à travers le stator de la machine (N), une valeur théorique ($\omega^*_{sl}$) fournie au régulateur de fréquence de glissement (113) ou au régulateur de couple de rotation est limitée à une valeur maximale de fréquence de glissement ($\omega^*_{sl\_i\_max}$) ou à une valeur maximale de couple de rotation,
- pour la limitation de la composante de courant de fréquence fondamentale générant un flux du courant de stator la vitesse à laquelle une valeur théorique ($\Psi^*_\mathrm{S}$) fournie au régulateur de flux de stator (123) se modifie, est limitée à une valeur maximale ($\Delta\Psi_{S,max}$),
- la valeur maximale de fréquence de glissement ($\omega^*_{sl\_i\_max}$) ou la valeur maximale de couple de rotation est calculée en fonction

d'une valeur maximale de courant prédéfinie ($i_{S,max}$) pour une amplitude de fréquence fondamentale de courant de stator du courant de stator,

d'une valeur réelle ($i_{Sd,mod}$) générée par filtrage de valeurs de courant mesurées du courant de stator ($i_\mathrm{S}$) conformément à la composante de courant de fréquence fondamentale générant un flux du courant de stator ($i_\mathrm{S}$) et

d'une valeur réelle ($|i_{Sq}|_f$) générée par filtrage de valeurs de courant mesurées du courant de stator ($i_\mathrm{S}$) conformément à la composante de courant de fréquence fondamentale générant un couple de rotation du courant de stator ($i_\mathrm{S}$), et

dans lequel une première différence, qui est une différence de la valeur réelle ($|i_{Sq}|_f$) générée par filtrage de valeurs de courant mesurées du courant de stator ($i_\mathrm{S}$) conformément à la composante de courant de fréquence fondamentale générant un couple de rotation du courant de stator ($i_\mathrm{S}$) et d'une valeur maximale ($i_{Sq,max}$), générée à partir de la valeur maximale de courant prédéfinie ($i_{S,max}$) et d'une valeur réelle ($i_{Sd,mod}$) filtrée de la composante de courant de fréquence fondamentale générant un flux, de la composante de courant de fréquence fondamentale générant un couple de rotation, est fournie à un premier dispositif de réglage (401-409) avec un régulateur proportionnel-intégral (403) et

dans lequel une deuxième différence, qui est une différence d'une valeur réelle ($|i_{Sd}|_f$) générée par filtrage de valeurs de courant mesurées du courant de stator ($i_\mathrm{S}$) conformément à la composante de courant de fréquence fondamentale générant un flux du courant de stator ($i_\mathrm{S}$) et d'une valeur maximale ($i_{Sd,max}$) de la composante de courant de fréquence fondamentale générant un flux du courant de stator, est fournie à un deuxième dispositif de réglage (201-209) avec un régulateur proportionnel (203),

dans lequel une valeur de sortie du premier dispositif de réglage (401-409) est fournie à une entrée du premier dispositif de limitation (107) pour la limitation de la composante de courant de fréquence fondamentale générant un couple de rotation ($i_{Sq}$) du courant de stator, et

dans lequel une valeur de sortie du deuxième dispositif de réglage (201-209) est fournie à une entrée d'un deuxième dispositif de limitation (121) pour la limitation de la composante de courant de fréquence fondamentale générant un flux du courant de stator.

4. Procédé selon la revendication 3, dans lequel la machine à courant triphasé (N) est une machine asynchrone et dans lequel la machine est commandée et/ou réglée en utilisant le régulateur de flux de stator (123) et le régulateur de fréquence de glissement (113).

FIG. 1

FIG. 2

FIG. 3

FIG. 4

EP 2 433 356 B1

**FIG. 5**

**FIG. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008052714 A1
- WO 2005018086 A

- DE 4110225

**In der Beschreibung aufgeführte Nicht-Patentliteratur**

- Schnelle Drehmomentregelung im gesamten Drehzahlbereich eines hochausgenutzten Drehfeldantriebs. **DIETER MAISCHAK.** Fortschrittsberichte. VDI-Verlag, 1995